# EUROPÄISCHE PATENTANMELDUNG

(11) **EP 0 521 179 A1**
(43) Veröffentlichungstag der Anmeldung: **07.01.1993**
(21) Anmeldenummer: 91110911.4
(22) Anmeldetag: 02.07.1991
(51) Int. Cl.: B30B 11/00, B30B 7/04, B29C 43/14, B01D 39/20, C04B 38/00

(54) **Verfahren und Vorrichtung zur Herstellung von rohrförmigen Filterelementen**

(71) Anmelder: E. Begerow GmbH & Co., D-55450 Langenlonsheim (DE); WERZALIT AG + CO., D-71720 Oberstenfeld (DE)
(72) Erfinder: Golombek, Jörg, W-7141 Oberstenfeld (DE); Tullius, Helmut, W-6538 Münster, Sarmsheim (DE)
(74) Vertreter: Oppermann, Ewald, Dipl.-Ing.

(57) **Zusammenfassung**

In der Anmeldung werden ein Verfahren und zur Verfahrensdurchführung besonders geeignete Vorrichtungen angegeben, mit dem bzw. denen auch sehr dicke und in ihren Porengefügen homogene und eigenstabile Tiefenfilterschichten kostengünstig erzeugt werden können. Bei dem Verfahren werden die mit einem Bindemittel gemischten Filterstoffe in einen rohrförmigen Hohlraum eingefüllt und darin durch radiale Druckeinwirkung zu einem rohrförmigen Vorpreßling vorverdichtet. Der Vorpreßling wird dann unter Druckeinwirkung in axialer Richtung fertiggepreßt. Es sind mehrere Vorrichtungen zum Vorpressen und eine Vorrichtung zum Fertigpressen gezeigt.

## Beschreibung

Die Erfindung betrifft ein Verfahren zur Herstellung von rohrförmigen Filterelementen aus faserförmigen und/oder pulverförmigen Filterstoffen sowie eine Vorrichtung zur Durchführung des Verfahrens.

Zur Klär- und Sterilfiltration von Getränken, Lebensmitteln,chemischen und pharmazeutischen Produkten werden Tiefenfilterschichten eingesetzt. Mit der zunehmenden Einführung der Membranfiltration unmittelbar vor der sterilen Abfüllung von Flüssigkeiten kommt der vorausgehenden Feinfiltration, an die aus wirtschaftlicher und mikrobiologischer Sicht hohe Anforderungen zu stellen sind, eine wachsende Bedeutung zu. Eine derartige Feinfiltration ist nach dem stand der Technik nur mit einer sehr wirksamen Tiefenfiltration möglich. Durch ihre sehr große innere Oberfläche sind Tiefenfilterschichten vorzugweise im Entkeimungsbereich als Membranfilter prädestiniert.

Bisher werden Tiefenfilterschichten auf Papiermaschinen unter Einsatz von Wasser als Trägerstoff hergestellt. Die Dicke der dabei durch Aufschüttungen enstehenden Filterschichten ist aber auf maximal etwa 4 mm begrenzt. Außerdem resultieren bei diesem aufwendigen und ernergieverbrauchenden Naßverfahren flachliegende Filterschichten, die nur über eine geringe Eigenstabilität verfügen und daher in den üblichen Filtrierapparaten der flächigen Stützung bedürfen.

Der Erfindung liegt die Aufgabe zugrunde, ein Verfahren und zur Verfahrensdurchführung besonders geeignete Vorrichtungen bereitzustellen, mit dem bzw.denen auch sehr dicke und in ihren Porengefügen dennoch homogene und eigenstabile Tiefenfilterschichten kostengünstig erzeugt werden können, deren Formgebung dickwandige, gewünschtenfalls aus mehreren konzentrischen Schichten aufgebaute Filterelemente ergibt, die in Filterkerzen eingesetzt werden können.

Diese Aufgabe ist erfindungsgemäß dadurch gelöst, daß die Filterstoffe mit einem Bindemittel gemischt in einen rohrförmigen Hohlraum eingefüllt und darin durch radiale Druckeinwirkung zu einem rohrförmigen Vorpreßling vorverdichtet werden, wonach der Vorpreßling unter Druckeinwirkung in axialer Richtung fertiggepreßt wird.

Durch die mit dem erfindungsgemäßen Verfahren erzielbaren dickwandigen Filterelemente läßt sich eine sehr erhebliche Verbesserung des Filtrationsverhaltens erreichen (Leistung und Klärschärfe). Gegenüber der bisher üblichen dünnen Tiefenfilterschicht ergibt sich ein geringerer spezifischer Verbrauch an Filterstoffen, bezogen auf die Filtratmenge. Da die Herstellung auf vergleichsweise trockenem Wege erfolgen kann und kein Wasser als Trägerstoff erforderlich ist, wird die Umwelt weniger belastet. Da nicht mit nassem Material gearbeitet wird, ergibt sich natürlich auch eine Energieeinsparung bei der Herstellung der Filterelemente. Schließlich können mit dem erfindungsgemäßen Verfahren bei entsprechend dimensionierten Herstellvorrichtungen praktisch beliebige Abmessungen und Proportionen für die Filterkörper erzielt werden.

Vorteilhafte Einzelheiten des erfindungsgemäßen Verfahrens und Vorrichtungen zur Durchführung des Verfahrens sind in den Ansprüchen 2 bis 10 enthalten. Sie sind nachstehend anhand der Figuren 1 bis 4 näher erläutert. Es zeigen:
- Fig.1a und 1b: zwei verschiedene Arbeitsstellungen einer Ausführungsform einer Vorrichtung zur Herstellung eines Filterelement-Vorpreßlings,
- Fig.2a und 2b: zwei verschiedene Arbeitsstellungen einer anderen Ausführungsform einer Vorrichtung zur Herstellung eines Filterelement-Vorpreßlings,
- Fig. 3: eine weitere Ausführungsform einer Vorrichtung zur Herstellung eines Filterelement-Vorpreßlings und
- Fig. 4: die Prinzipdarstellung einer Vorrichtung zum Fertigpressen des Filterelement-Vorpreßlings.

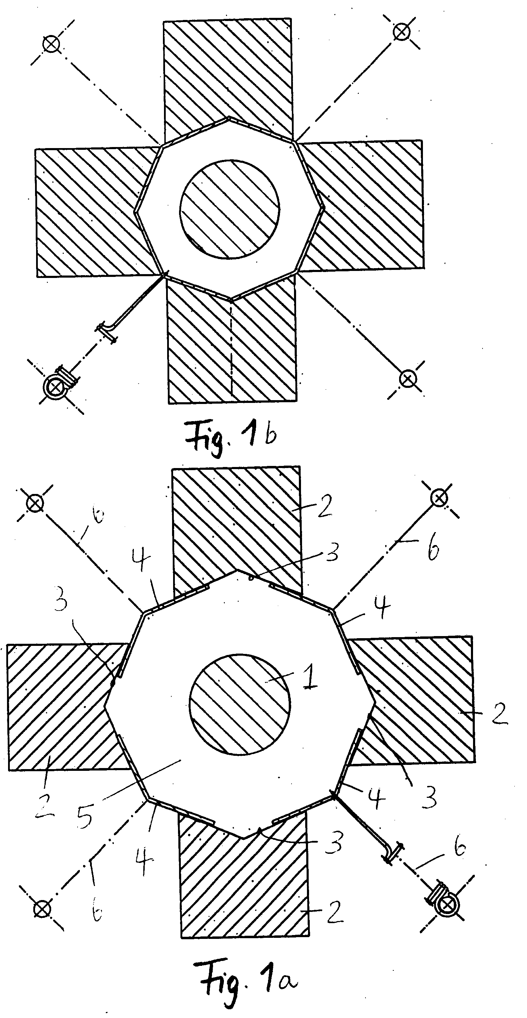

Die Figuren 1a und 1b zeigen den Querschnitt einer Vorrichtung zur Herstellung eines Filterelement-Vorpreßlings ; in Fig. 1a befindet sich die Vorrichtung in Füllstellung während in Fig. 1b die Vorrichtung in der Arbeitsstellung gezeigt ist,welche sie nach dem Preßvorgang einnimmt.

Wie aus Fig. 1a und 1b zu erkennen ist, besteht diese Vorrichtung aus dem im Zentrum angeordneten Kern 1 und den symmetrisch um diesen herum angeordneten Preßstempeln 2, welche in radialer Richtung beweglich angeordnet sein sollen. Die Preßstempel 2 sind an ihrem dem Kern 1 zugewandten Ende mit der stumpfwinkligen Vertiefung 3 versehen. Zwischen den stumpfwinklichen Vertiefungen 3 sind rinnenförmige Wände 4 in der Weise angeordnet, daß sie zusammen mit den Preßstempeln 2 um den Kern 1 herum einen rohrförmigen Hohlraum 5, nämlich den für die Aufnahme des zu pressender Werkstoffes vorgesehenen Raum bilden. Die Wände 4 sind durch die Zugfedern 6 in radialer Richtung vorgespannt, wodurch sie fest an die Vertiefungen 3 der Preßstempel gepreßt werden.

Die Vorrichtung gemäß Fig. 1b zeigt die Vorrichtung gemäß Fig. 1a nachdem die Preßstempel 2 in radialer Richtung auf den Kern 1 zu bewegt worden sind. Dabei haben sich die Wände 4 gegen die Kraft der Zugfedern 6 ebenfalls in radialer Richtung bewegt und sind soweit in der Vertiefung geglitten, bis sich die Längskanten zweier benachbarter Wände 4 berühren.Wenn im Hohlraum 5 der zu pressende Werkstoff eingefüllt war, dann ist er nach dem Preßvorgang je nach Dimensionierung der Vorrichtung im Verhältnis 1:2 bis 1:5 verdichtet worden. Der dabei erzeugte Filterelement-Vorpreßling wird, nachdem die Vorrichtung wieder geöffnet worden ist und die in Fig.1a gezeigte Stellung einnimmt, herausgenommen und anschließend in einer anderen Presse fertiggepreßt. Das Fertigpressen erfolgt durch Druck in axialer Richtung auf den Filterelement-Vorpreßling und gleichzeitiger Zufuhr von Wärme, wodurch die im Werkstoff enthaltenen Bindemittel aushärten.

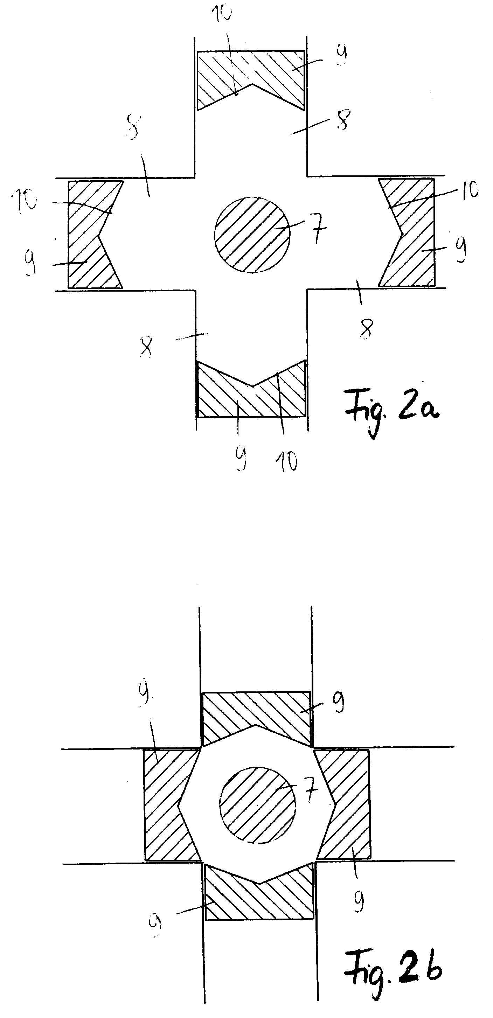

Die aus den Figuren 2a und 2b ersichtliche Vorpreßform besitzt ebenfalls einen Kern 7. Um diesen herum sind symmetrisch eine geradzahlige Anzahl von radial gerichteten und an ihrem dem Kern zugewandten Enden miteinander verbundenen Schächten 8 angeordnet. Die Ausführungsform der Vorpreßform gemäß den Figuren 2a und 2b besitzt vier Schächte 8, in welchen radial verstellbar die Preßstempel 9 angeordnet sind. Die dem Kern 7 zugewandten Enden der Preßstempel 9 sind in gleicher Weise wie die Enden der Preßstempel 2 bei der Ausführungsform gemäß Fig. 1a und 1b mit einer stumpfwinkligen Vertiefung versehen.Diese Vertiefung 10 kann aber auch eine andere Form, beispielsweise die eines Kreisabschnittes, aufweisen. Das gleich gilt für die Vertiefung 3. Fig. 2a zeigt die Vorrichtung in der Füllstellung und Fig.2b die gleiche Vorrichtung in der Preßstellung.

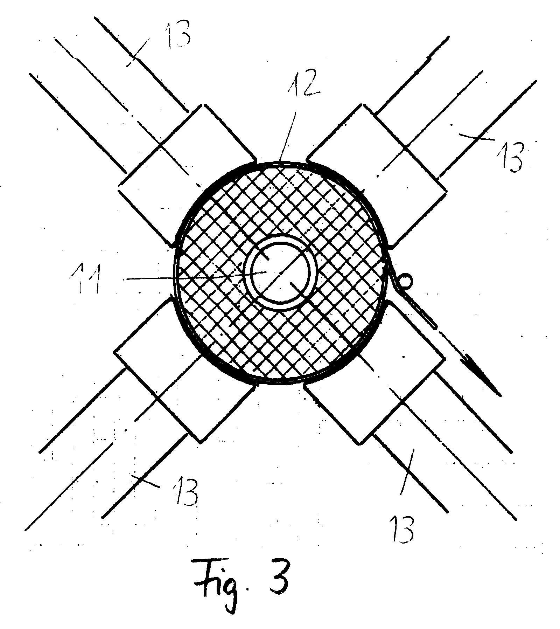

Bei der in Fig. 3 gezeigten Vorrichtung ist im Zentrum ebenfalls ein Kern 11 vorhanden. Kreisförmig um den Kern 11 herum und mit Abstand zu diesem ist ein Stahlband angeordnet, dessen Längskanten einander überlappen und einen Hohlzylinder 12 bilden. Außerhalb des Hohlzylinders 12 sind die radial gerichteten Preßstempel 13 angeordnet, deren mit der Oberfläche des Hohlzylinders 12 in Berührung stehendes Ende mit einer entsprechenden Vertiefung versehen ist.

Der zu pressende Werkstoff wird bei dieser Vorrichtung in den Hohlraum zwischen dem Kern 11 und dem Hohlzylinder 12 eingefüllt. Wenn von den Preßzylindern 13 Druck auf den Hohlzylinder 12 ausgeübt wird, wird der im Hohlraum befindliche Werkstoff verdichtet.

Der Filterelement-Vorpreßling kann dadurch in mehreren Schichten aufgebaut werden, daß die Vorrichtung mehrmals geöffnet und nach dem Einfüllen weiteren Werkstoffes wieder geschlossen wird, ohne daß der bereits gepreßte Filterelement-Vorpreßling entnommen wird.

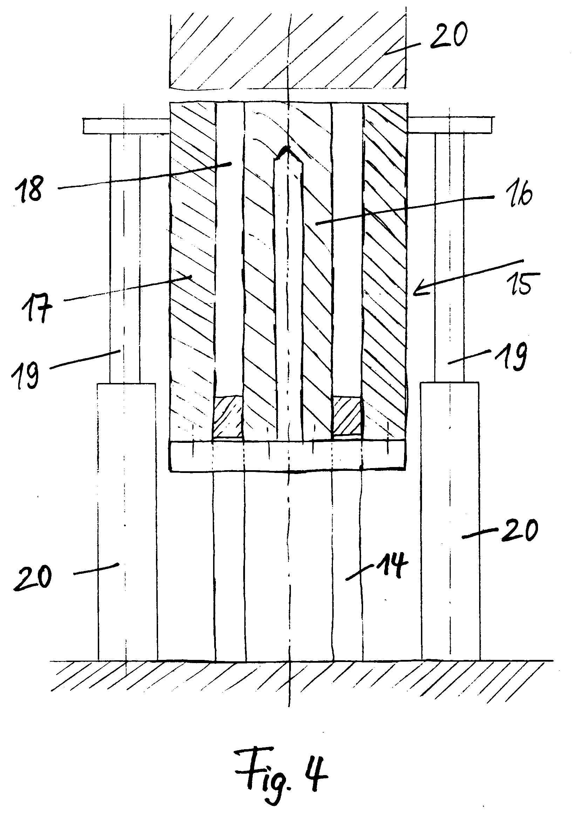

Für das Fertigpressen des Filterelement-Vorpreßlings kann eine Axialpresse Verwendung finden, welche in Fig.4 schematisch dargestellt ist. Diese besitzt ein Preßwerkzeugunterteil, welches sich aus dem rotationssymmetrischen feststehenden Teil 14 und dem ebenfalls rotationssymmetrischen beweglichen Teil 15 zusammensetzt.Das bewegliche Teil 15 besteht aus dem zylindrischen Kern 16 und der rohrförmigen Hülle 17, zwischen denen der Füllraum 18 für die Aufnahme des Filterelement-Vorpreßlings vorhanden ist.Das bewegliche Teil 15 ist an den Kolbenstangen 19 geführt, welche in die hydaulisch oder pneumatisch betätigten Zylinder 20 eintauchen.Über dem beweglichen Teil 15 ist das vertikal verstellbare Preßwerkzeugoberteil 21 angeordnet.

Das Fertigpressen des Filterelementes wird nun in der Weise durchgeführt, daß der Filterelement-Vorpreßling vor dem Aufsetzen des Preßwerkzeugoberteils 21 in den Füllraum 18 eingesetzt wird. Danach wird mit dem Preßwerkzeugoberteil ein vertikal gerichteter Druck auf das bewegliche Teil 15 ausgeübt. Dieses wird, geführt von dem feststehenden Teil 14 und den Kolbenstangen 19, nach unten abgesenkt, wobei der im Füllraum 18 befindliche Filterelement-Vorpreßling axial verdichtet wird. Nach Abheben des Preßwerkzeugoberteils 21 kann das fertiggepreßte Filterelement ausgestoßen und das bewegliche Teil 15 in seine Ausgangslage zurückgebracht werden.

Bei der axialen Verdichtung des Filterelement-Vorpreßlings erhalten die Filterelemente, die aus den mit den Vorrichtungen gemäß Fig.1 und 2 als im Querschnitt achteckige Filterelement-Vorpreßlingen erzeugt werden, ebenfalls eine zylindrische Außenform, wie sie für den Einsatz als Filterelement erforderlich ist.

## Patentansprüche

1. Verfahren zur Herstellung von rohrförmigen Filterelementen aus faserförmigen und/oder pulverförmigen Filterstoffen
dadurch gekennzeichnet, daß die Filterstoffe mit einem Bindemittel gemischt in einen rohrförmigen Hohlraum eingefüllt und darin durch radiale Druckeinwirkung zu einem rohrförmigen Vorpreßling vorverdichtet werden, wonach der Vorpreßling unter Druckeinwirkung in axialer Richtung fertiggepreßt wird.

2. Verfahren nach Anspruch 1,
dadurch gekennzeichnet, daß Bindemittel auf Basis duroplastischer oder thermoplastischer Kunstharze verwendet werden.

3. Verfahren nach den Ansprüchen 1 und 2,
dadurch gekennzeichnet, daß die Bindemittel in einem flüssigen Träger gelöst oder suspendiert den Filterstoffen zugefügt werden.

4. Verfahren nach einem der Ansprüche 1 bis 3,
dadurch gekennzeichnet, daß die auf den Vorpreßling in axialer Richtung ausgeübte Druckeinwirkung unter Wärmezufuhr erfolgt.

5. Verfahren nach Anspruch 1,
dadurch gekennzeichnet, daß anorganische Bindemittel, vorzugweise Wasserglas, verwendet werden.

6. Verfahren nach Anspruch 1,
dadurch gekennzeichnet, daß der Vorpreßling in mehreren konzentrisch angeordneten Schichten gepreßt wird.

7. Verfahren nach Anspruch 1,
dadurch gekennzeichnet, daß der Hohlraum vor dem Einfüllen des Werkstoffes mit einer Folie ausgekleidet wird.

8. Vorrichtung zur Durchführung des Verfahrens nach den Ansprüchen 1 bis 7,
dadurch gekennzeichnet, daß die Vorpreßform einen im Zentrum angeordneten Kern ( 1 ) aufweist und die äußere Begrenzung des Hohlraumes ( 5 ) aus mehreren Preßstempeln ( 2 ) und zwischen diesen vorhandenen rinnenförmigen Wänden ( 4 ) besteht, wobei die zum Kern hin verschiebbaren Preßstempel ( 2 ) auf der dem Kern zugewandten Seite mit einer Vertiefung ( 3 ) versehen und die rinnenförmigen Wände ( 4 ) mittels Zugfedern ( 6 ) radial derart vorgespannt sind, daß sich die Wände ( 4 ) in der Vertiefung gleitend abstützen.

9. Vorrichtung zur Durchführung des Verfahrens nach den Ansprüchen 1 bis 7,
dadurch gekennzeichnet, daß die Vorpreßform einen im Zentrum angeordneten Kern ( 7 ) aufweist, der unter Bildung des Hohlraumes mit Abstand von einer geradzahligen Anzahl von radial gerichteten, an ihren dem Kern ( 7 ) zugewandten Enden miteinander verbundenen Schächten ( 8 ) umgeben ist, in denen Preßstempel ( 9 ) angeordnet sind.

10. Vorrichtung zur Durchführung des Verfahrens nach den Ansprüchen 1 bis 7,
dadurch gekennzeichnet, daß die Vorpreßform einen im Zentrum angeordneten Kern ( 11 ) aufweist, der unter Bildung des Hohlzylinders ( 12 ) mit Abstand von einem kreisförmig angeordneten, verengbar ausgebildeten Metallband umgeben ist, auf dessen Außenfläche eine Mehrzahl von Preßstempeln ( 13 ) radial angestellt sind.
